# EUROPEAN PATENT SPECIFICATION

(11) **EP 2 929 074 B1**
(45) Date of publication and mention of the grant of the patent: **05.04.2017**
(21) Application number: 13818988.1
(22) Date of filing: 10.12.2013
(51) Int. Cl.: D06F 39/00

(54) **A HOUSEHOLD APPLIANCE HAVING KEY LOCK FUNCTION**
HAUSHALTSGERÄT MIT SCHLÜSSELSPERRE
APPAREIL MÉNAGER POSSÉDANT UNE FONCTION DE VERROUILLAGE PAR TOUCHES

(30) Priority: 10.12.2012 TR 201214363
(43) Date of publication of application: 14.10.2015
(73) Proprietor: Arçelik Anonim Sirketi, 34950 Istanbul (TR)
(72) Inventor: BUYUKTOPCU, Cagatay, 34950 Istanbul (TR); SUNETCI, Onder, 34950 Istanbul (TR)
(86) International application number: PCT/EP2013/076015
(87) International publication number: WO 2014/090767

(56) References cited:
- EP-A1- 0 859 296
- WO-A1-2010/076138
- US-B1- 6 425 156

## Description

The present invention relates to a household appliance wherein the key functions are locked by the key lock function being activated. In household appliances, for example in washing machines, key lock function, which is also named as the child lock, is used in order that the user interface functions such as program cancellation, program pause or new program start can be deactivated. In the state of the art, the key lock function is activated or deactivated as a result of using the key combination determined during the production of the appliance or by the service personnel. The user activates the key lock function by entering the key combination generally determined by the service personnel and changes the key lock function from the active mode to the passive mode again by the same key combination. However, these key combinations can sometimes be easily deciphered by the child. In such situations, the key lock function is activated or deactivated in an uncontrolled manner. In the state of the art International Patent Document No. WO2010076138, a household appliance is described, the key lock function of which is provided to be easily cancelled by the user when required.

US Patent US 6,425,156 discloses a control panel of a washing machine comprising control actuators for entering parameters such as rotational speed values of operating programs. The actuators can alternatively be used by a competent person, e.g. a customer service engineer, for changing particular operating program sequences or particular parameter values for program functions by entering a particular succession or sequence of functions using the control actuators.

European Patent Application EP 859 296 A1 discloses a microprocessor controlled washing machine with a plurality of switches in which the selected washing program is protected against manipulation, e.g. by children, by requiring the operation of two of the optional inputs simultaneously.

The aim of the present invention is the realization of a household appliance wherein the key lock combination is used in a safer manner. The household appliance realized in order to attain the aim of the present invention, explicated in the first claim and the respective claims thereof, comprises a control panel, more than one button located on the control panel and providing the determination of the program parameters, a key combination formed by selecting more than one button simultaneously or successively and a microcontroller which does not allow any changes to be made on the running program as long as this key combination is not triggered while a program is running. The microcontroller comprises at least one memory wherein the key combinations determined by the user are saved and stored. In order that the key lock function can be activated or deactivated by the microcontroller, the key combination stored in the memory is required to be entered by the user. When the user desires to change the key combination, the new key combination determined by the user is saved in the memory by overwriting the old key combination in the memory. The key combination is stored in the memory until a new key combination is determined. Thus, the microcontroller allows the key combination, which activates or deactivates the key lock function, to be determined and/or changed by the user.

In an embodiment of the present invention, the microcontroller allows that the key combination activating the key lock function is determined differently from the key combination deactivating the key lock function. The user introduces the key combinations, which activate and deactivate the key lock function, to the microcontroller separately. The microcontroller decides the position of the key lock function according to the key combination entered by the user. Thus, it becomes difficult for the children to decipher the key combination and the user is prevented from accidentally activating or deactivating the key lock function.

In an embodiment of the present invention, the microcontroller allows the user to choose how long to press the buttons while determining the key combination. The user holds down at least one button for a certain time while determining the key combination. The amount of time the button is held down is saved in the memory and thus, the amount of time is introduced to the microcontroller. The amount of time the button is held down in order that the key lock function can be activated or deactivated is required to be the same as the amount of time saved in the memory while determining the key combination. Thus, it becomes difficult for the children to decipher the key combination and for the user to involuntarily activate or deactivate the key lock function by accidentally entering the key combination.

In an embodiment of the present invention, the microcontroller ensures that the amount of time to pass between two successive presses of the buttons while determining the key lock function is determined by the user. The amount of time passing between two successive presses of the buttons by the user while determining the key combination is saved in the memory. The saved amount of time should match the amount of time passing between two successive presses of the buttons while activating or deactivating the key lock function. Thus, it becomes difficult to decipher the key combination and the key combination is prevented from being entered accidentally.

In an embodiment of the present invention, the household appliance comprises a screen displaying whether the key lock function is activated or deactivated. The screen provides the commands transmitted from the microcontroller and the key lock information to be displayed for the user.

In an embodiment of the present invention, the household appliance is a dishwasher.

In an embodiment of the present invention, the household appliance is a washing machine.

In an embodiment of the present invention, the household appliance is a dryer.

In an embodiment of the present invention, the household appliance is an oven.

By means of the present invention, the key combination is determined and can be changed whenever desired by the user. By being able to select the key combination activating the key lock function differently from the key combination deactivating the key lock function, it becomes difficult to decipher the key combination.

The household appliance realized in order to attain the aim of the present invention is illustrated in the attached figures, where:

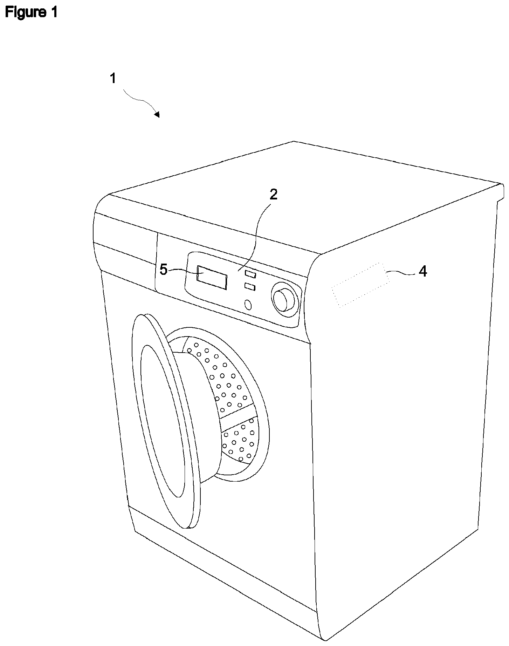

Figure 1 - is the perspective view of a household appliance.

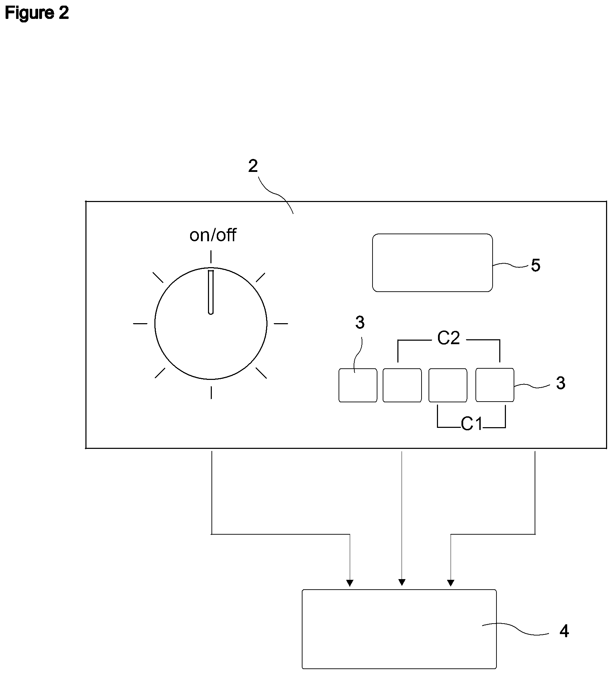

Figure 2 - is the schematic view of a control panel and a microcontroller in an embodiment of the present invention.

The elements illustrated in the figures are numbered as follows:
1. Household appliance
2. Control panel
3. Button
4. Microcontroller
5. Screen

The household appliance (1) comprises a control panel (2), more than one button (3) located on the control panel (2) and providing the determination of the program parameters, and a microcontroller (4) that provides the activation or the deactivation of the key lock function and that has a memory wherein the key lock function is saved by means of a key combination (C1, C2) formed by selecting more than one button (3) simultaneously or successively. When the key lock function is activated, the buttons (3) are deactivated and thus, the buttons (3) do not serve their function even if the buttons (3) are pressed accidentally. When the key lock function is deactivated, the buttons (3) can be used.

The microcontroller (4) of the present invention allows the key combination (C1, C2), which activates or deactivates the key lock function, to be determined and/or changed by the user. The microcontroller (4) has at least one memory wherein the key combination (C1, C2) is saved. The microcontroller (4) ensures that the new key combination (C1, C2) entered by the user is saved by means of the memory and the key lock function is activated or deactivated as per the desire of the user. Thus, in cases that the key lock is deciphered without the intention of the user, for example in the case that the key lock is deciphered by a child, the microcontroller (4) allows the user to determine the key combination (C1, C2) again by changing the existing key combination (C1, C2). Thus, the user determines the key combination (C1, C2) by himself/herself and can change it whenever desired.

In an embodiment of the present invention, the microcontroller (4) allows that the key combination (C1) activating the key lock function is determined differently from the key combination (C2) deactivating the key lock function. Thus, it becomes difficult for the children to decipher the key combination (C1, C2) and the user is prevented from accidentally activating or deactivating the key lock function.

In an embodiment of the present invention, the microcontroller (4) allows that the user chooses how long to press the buttons (3) while determining the key combination (C1, C2). The microcontroller (4) provides the saving in the memory of the amount of time passing while the user holds down at least one button (3) during the determination of the key combination (C1, C2). Thus, it becomes difficult for the children to decipher the key combination (C1, C2) and for the user to involuntarily activate or deactivate the key lock function by accidentally entering the key combination (C1, C2).

In an embodiment of the present invention, the microcontroller (4) ensures that the amount of time passing between two successive presses of the buttons (3) while determining the key lock function is determined by the user. The amount of time passing between two successive presses of the buttons (3) by the user while determining the key combination (C1, C2) is saved in the memory. The saved amount of time should match the amount of time passing between two successive presses of the buttons (3) while activating or deactivating the key lock function. Thus, it becomes difficult to decipher the key combination (C1, C2).

In an embodiment of the present invention, the household appliance (1) comprises a screen (5) displaying whether the key lock function is activated or deactivated. By means of the screen (5), the user can monitor the key lock function.

In an embodiment of the present invention, the household appliance (1) is a dishwasher.

In an embodiment of the present invention, the household appliance (1) is a washing machine.

In an embodiment of the present invention, the household appliance (1) is a dryer.

In an embodiment of the present invention, the household appliance (1) is an oven.

In the household appliance (1) of the present invention, the user determines the key combination (C1, C2) by himself/herself and can change it whenever desired. Thus, in the case that the key combination (C1, C2) is deciphered by children, the key combination (C1, C2) can be determined again. By being able to determine the key combinations (C1, C2), which activate and deactivate the key lock function, differently from each other, the control of the key lock function is facilitated.

It is to be understood that the present invention is not limited by the embodiments disclosed above and a person skilled in the art can easily introduce different embodiments. These should be considered within the scope of the protection postulated by the claims of the present invention.

## Claims

1. A household appliance (1) **comprising** a control panel (2), more than one button (3) located on the control panel (2) and providing the determination of the program parameters, a microcontroller (4) providing the activation or the deactivation of the key lock function by means of a key combination (C1, C2) formed by selecting more than one button (3) simultaneously or successively, **characterized by** the microcontroller (4) which allows the key combination (C1, C2) to be determined and/or changed by the user.

2. A household appliance (1) as in Claim 1, **characterized by** the microcontroller (4) which allows that the key combination (C1) activating the key lock function is determined differently from the key combination (C2) deactivating the key lock function.

3. A household appliance (1) as in Claim 1, **characterized by** the microcontroller (4) which provides that the user chooses how long to press the buttons (3) while determining the key combination (C1, C2).

4. A household appliance (1) as in any one of the Claims 1 to 3, **characterized by** the microcontroller (4) which ensures that the amount of time passing between two successive presses of the buttons (3) while determining the key lock function is determined by the user.

5. A household appliance (1) as in any one of the above claims, **characterized by** a screen (5) which displays whether the key lock function is activated or deactivated.

6. A household appliance (1) as in any one of the above claims, which is a dishwasher.

7. A household appliance (1) as in any one of the Claims 1 to 5, which is a washing machine.

8. A household appliance (1) as in any one of the Claims 1 to 5, which is a dryer.

9. A household appliance (1) as in any one of the Claims 1 to 5, which is an oven.

## Patentansprüche

1. Haushaltsgerät (1), **umfassend** ein Bedienfeld (2), mehrere Tasten (3), die an dem Bedienfeld (2) angeordnet sind und die Bestimmung der Programmparameter ermöglichen, einen Mikrocontroller (4), der die Aktivierung oder Deaktivierung der Tastensperrfunktion mittels einer Tastenkombination (C1, C2) ermöglicht, die durch Auswählen von mehr als einer Taste (3) gleichzeitig oder hintereinander gebildet ist, **dadurch gekennzeichnet, dass** der Mikrocontroller (4) zulässt, dass die Tastenkombination (C1, C2) vom Benutzer bestimmt und/oder geändert wird.

2. Haushaltsgerät (1) nach Anspruch 1, **dadurch gekennzeichnet, dass** der Mikrocontroller (4) zulässt, dass die Tastenkombination (C1), die die Tastensperrfunktion aktiviert, verschieden von der Tastenkombination (C2) bestimmt wird, die die Tastensperrfunktion deaktiviert.

3. Haushaltsgerät (1) nach Anspruch 1, **dadurch gekennzeichnet, dass** der Mikrocontroller (4) ermöglicht, dass der Benutzer beim Bestimmen der Tastenkombination (C1, C2) wählt, wie lange die Tasten (3) gedrückt werden.

4. Haushaltsgerät (1) nach einem der Ansprüche 1 bis 3, **dadurch gekennzeichnet, dass** der Mikrocontroller (4) sicherstellt, dass die Zeit, die zwischen zwei aufeinanderfolgenden Druckbetätigungen der Tasten (3) verstreicht, beim Bestimmen der Tastensperrfunktion vom Benutzer bestimmt wird.

5. Haushaltsgerät (1) nach einem der vorangehenden Ansprüche, **gekennzeichnet durch** einen Bildschirm (5), der anzeigt, ob die Tastensperrfunktion aktiviert oder deaktiviert ist.

6. Haushaltsgerät (1) nach einem der vorangehenden Ansprüche, das ein Geschirrspüler ist.

7. Haushaltsgerät (1) nach einem der vorangehenden Ansprüche 1 bis 5, das eine Waschmaschine ist.

8. Haushaltsgerät (1) nach einem der vorangehenden Ansprüche 1 bis 5, das ein Trockner ist.

9. Haushaltsgerät (1) nach einem der Ansprüche 1 bis 5, das ein Ofen ist.

## Revendications

1. Un électroménager (1) **comprenant** un panneau de commande (2), plus d'une touche (3) qui est située sur le panneau de commande (2) et qui permet la détermination des paramètres de programme, un microcontrôleur (4) qui permet l'activation ou la désactivation de la fonction de verrouillage de touches au moyen d'une combinaison de touches (C1, C2) formée en choisissant plus d'une touche (3) simultanément ou successivement, **caractérisé par** le microcontrôleur (4) qui permet la détermination et/ou le changement de la combinaison de touches (C1, C2) par l'utilisateur.

2. Un électroménager (1) selon la Revendication 1, **caractérisé par** le microcontrôleur (4) qui permet la détermination de la combinaison de touches (C1) activant la fonction de verrouillage des touches de façon différente de la combinaison de touches (C2) désactivant la fonction de verrouillage de touches.

3. Un électroménager (1) selon la Revendication 1, **caractérisé par** le microcontrôleur (4) qui assure que l'utilisateur choisit la durée d'appui des touches (3) lors de la détermination de la combinaison de touches (C1, C2).

4. Un électroménager (1) selon l'une quelconque des revendications de 1 à 3, **caractérisé par** le microcontrôleur (4) qui assure que l'utilisateur détermine le temps qui passe entre deux pressions successives des touches (3) lors de la détermination de la fonction de verrouillage de touches.

5. Un électroménager (1) selon l'une quelconque des revendications précédentes, **caractérisé par** un écran (5) qui affiche si la fonction de verrouillage de touches est activée ou désactivée.

6. Un électroménager (1) selon l'une quelconque des revendications précédentes, qui est un lave-vaisselle.

7. Un électroménager (1) selon l'une quelconque des revendications de 1 à 5, qui est un lave-linge.

8. Un électroménager (1) selon l'une quelconque des revendications de 1 à 5, qui est un sèche-linge.

9. Un électroménager (1) selon l'une quelconque des revendications de 1 à 5, qui est un four.
